# EUROPEAN PATENT APPLICATION

(11) **EP 1 661 762 A1**
(43) Date of publication of application: **31.05.2006**
(21) Application number: 04771450.6
(22) Date of filing: 10.08.2004
(51) Int. Cl.: B60R 11/02, B60R 16/02

(54) **VEHICLE INFORMATION PROVIDING DEVICE**

(30) Priority: 21.08.2003 JP 2003297830
(71) Applicant: NIPPON SEIKI CO., LTD., Nagaoka-shi, Niigata 940-8580 (JP)
(72) Inventor: Tamura, Shigeaki, Nagaoka-shi, Niigata 940-8580 (JP)
(74) Representative: Jackson, Richard Eric
(86) International application number: PCT/JP2004/011463
(87) International publication number: WO 2005/018996

(57) **Abstract**

Audio information providing means estimated to be mounted at an increasing ratio on a vehicle, and a vehicular information providing device enabled to satisfy the tastes of a user by applying a customize mode. Control means 201 has a customize mode, in which various kinds of setting of specifications relating to audio information of a speaker (or audio information providing means) 230 for providing a user with vehicular information are registered. Input means 211 sets the contents of said various kinds of setting in the customize mode. Second storage means (or storage means) 204 registers the contents of the various kinds of setting.

## Description

### Technical Field

The present invention relates to a vehicular information providing device for providing a user with various kinds of information by using audio information and, more particularly, to a vehicular information providing device capable of customizing the audio information according to the tastes of the user.

### Background Art

A known vehicular information providing device is disclosed in Patent Publication 1, for example. The vehicular information providing device of this kind includes display means (or visual information providing means) and voice output means (or audio information providing means). The display means displays visual information such as ordinary information including a covered distance value, or a residual fuel level or a time, and predetermined warning information, and the voice output means outputs emergent information or information, which may invite misunderstanding with visual information, as audio information.

### [Patent Publication 1] JP-A-9-66783

### Disclosure of the Invention

The vehicular information providing device thus far described provides the user with various kinds of information in combination of the visual information and the audio information, and has been improved in the usability for the user. Especially as the audio information, however, the users have different tastes. It is, therefore, desired to customize the voice generating means for generating the audio information. In accordance with this customization, there has been desired a vehicular information providing device, in which the usability of the voice output means for issuing the audio information or the vehicular information is improved in accordance with that customization thereby to provide excellent conveniences.

Noting the problems thus far described, the invention contemplates to provide a vehicular information providing device comprising audio information providing means estimated to be mounted in the future at an increasing ratio on a vehicle. The vehicular information providing device is improved in conveniences by realizing customization of the audio information providing means for issuing audio information containing at least vehicular information thereby to improve the usability of the audio information providing means.

In order to solve the problems thus far described, according to claim 1, there is provided a vehicular information providing device comprising: control means having a customize mode, in which various kinds of setting of specifications relating to audio information of audio information providing means for providing a user with the audio information containing at least vehicular information are registered; input means for determining the contents of the various kinds of setting in the customize mode; and storage means for registering the contents of the various kinds of setting.

In the vehicular information providing device of claim 1, according to claim 2, the contents of the various kinds of setting contain an item of whether or not the vehicular information providing means is to be employed.

In the vehicular information providing device of claim 1, according to claim 3, the contents of the various kinds of setting are stored in the storage means as a first audio information output item classified in plurality.

In the vehicular information providing device of claim 3, according to claim 4, the contents of the various kinds of setting have a second audio information output item accompanying the first audio information output item.

In the vehicular information providing device of claim 1, according to claim 5, the contents of the various kinds of setting contain an item on whether or not the volume of an audio device mounted on a vehicle is cut, or whether or not the volume of the audio device is reduced, when the audio information providing means outputs the audio information.

In the vehicular information providing device of claim 1, according to claim 6, the contents of the various kinds of setting contain an item for selecting the kinds of a voice.

In the vehicular information providing device of any of claims 1 to 6, according to claim 7, the contents of the various kinds of setting are so registered in the storage means that identification information by user recognition means for recognizing the user and the contents of the various kinds of setting are registered in a related state in the storage means.

In the vehicular information providing device of any of claims 1 to 7, according to claim 8, the vehicular information providing device further comprises display means for enabling displaying the contents of the various kinds of setting.

In the vehicular information providing device utilizing the audio information providing means, according to the invention, the customize registration of the audio information providing means according to the tastes of the user can be executed to satisfy the demands of the user having various tastes thereby to improve the conveniences of the vehicular information providing device.

### Brief Description of the Drawings

Fig. 1 is a sketch view of a vehicular information providing device of an embodiment of the invention.
Fig. 2 is a block diagram of the vehicular information providing device of the embodiment.
Fig. 3 is a diagram showing a customize mode of the embodiment.
Fig. 4 is a diagram showing another customize mode of the embodiment.
Fig. 5 is a diagram showing another customize mode of the embodiment.
Fig. 6 is a diagram showing another customize mode of the embodiment.
Fig. 7 is a diagram showing another customize mode of the embodiment.
Fig. 8 is a table of a stored state of the customize mode of the embodiment.
Fig. 9 is a table of a stored state of another customize mode of the embodiment.
Fig. 10 is a table of a stored state of another customize mode of the embodiment.
Fig. 11' presents diagrams showing other customize modes of the embodiment.

### Best Mode for Carrying Out the Invention

An embodiment of the invention is described in the following with reference to the accompanying drawings.

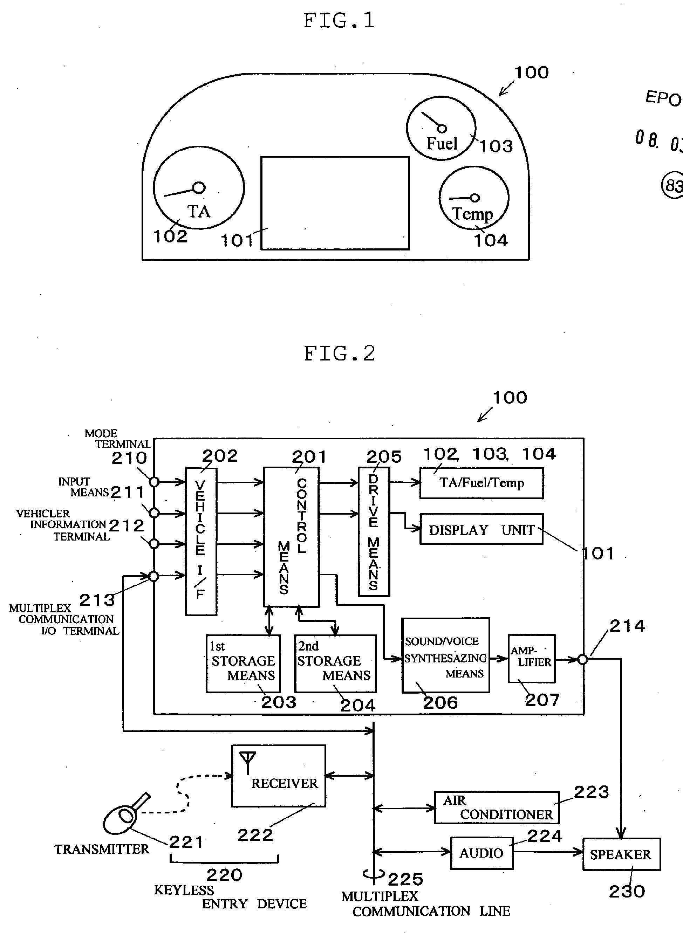

Fig. 1 is a sketch view of one example of a vehicular information providing device. A vehicular information providing device 100 is a vehicular meter provided with a display unit (or display means) 101 having a liquid crystal display panel such as a TFT or an organic EL panel for displaying various kinds of information, a tachometer 102, a fuel meter 103 and a thermometer 104.

Fig. 2 is a block diagram of the vehicular information providing device 100 of Fig. 1. This device is configured to comprise: a customize mode terminal (or customize setting means) 210 for shifting the vehicular information providing device 100 into a customize mode; input means 211 for setting various contents in the execution of the customize mode; a vehicular information terminal 212 and multiplex communication input/output means 213 for inputting/outputting vehicular information; vehicular interface (I/F) means 202; control means 201 for controlling the vehicular information providing device 100; first storage means 203 made of a ROM or the like for storing a processing program; second storage means 204 made of an EEPROM, a flash memory or the like for registering various kinds of setting made by the input means 211; the display unit 101 for displaying various kinds of information; drive means 205 for controlling the display of the display unit 101 and the drives of the various analog meters 102, 103 and 104; sound/voice synthesizing means 206 for reproducing sounds/voices; an amplifier 207 for amplifying the output signal (i.e., the sound/voice output signal) from the sound/voice synthesizing means 206; and an output terminal 214 for outputting an amplified signal from the amplifier 207.

With the vehicular information providing device 100, on the other hand, there are connected a keyless entry device (including a transmitter 221 and a receiver 222) 220 acting as user identifying means, an air conditioner (or air-con) 223 for managing the air condition of the vehicle, and an audio (or an audio device) 224 via a multiplex communication line 225. Moreover, a speaker (or audio information providing means) 230 is connected with the audio 224. On the other hand, the speaker 230 outputs not only sounds/voices accompanying the output signal from the audio 224 but also sounds/voices with the amplified signal from the output terminal 214 of the vehicular information providing device 100.

Here, the control means 201 is enabled via the multiplex communication line 225 to instruct the audio 224 to make the volume to a predetermined value or lower or to cut the volume of the audio 224.

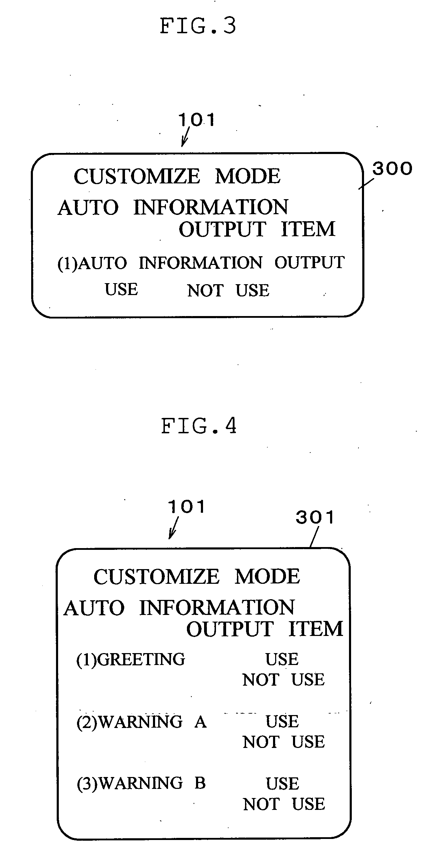

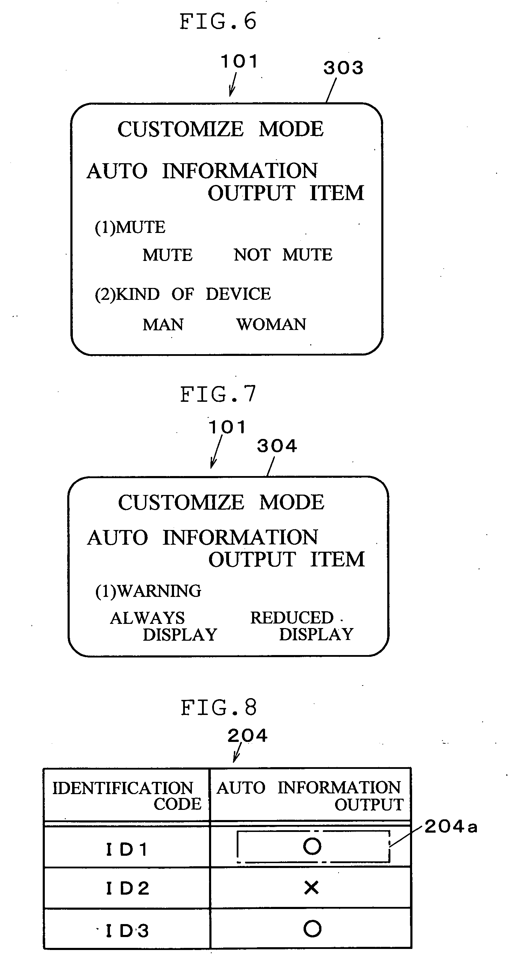

Next, the customize mode is described with reference to Fig. 2 to Fig. 10. Fig. 3 to Fig. 7 show the contents of various kinds of setting, which are displayed in the display unit 101 when the vehicular information providing device 100 is shifted into the customize mode. Fig. 8 to Fig. 10 show the registered states of the contents of the various kinds of setting, which are registered in the customize mode by the second storage means 204. In Fig. 8 to Fig. 10, circles designate the case, in which the mode "USE" is selected, and crosses designate the case, in which the mode "NOT USE" is selected.

The user of the vehicle operates the customize mode terminal 210 from the outside to instruct the control means 201 a shift to the customize mode owned beforehand by the control means 201. Specifically, when the terminal having the ordinary potential at the "high" level of the customize mode terminal 210 is changed to the "low" level by a predetermined operation of a switch or the like, the change can be recognized by the control means 201. At the shift to the customize mode, the control means 201 executes the processing through the drive means 205 to switch the display unit 101 from the ordinary display to an initial screen 300 in the customize mode, as shown in Fig. 3.

In the initial screen 300, the user selects it through the input means 211 whether or not the "audio information output" or the audio information output item (1) by the speaker 230 is employed (that is, whether or not the voice output by the speaker 230 is to be made). When the mode "USE" is selected by the user, for example, the control means 201 specifies the ID code (or ID information) of the user using the vehicle through the keyless entry device 220 (it is assumed here that the ID1 is attained as the ID code), and causes the set contents in the area corresponding to the ID code of the second storage means 204 (as indicated at 204a in Fig. 8).

Here is described another initial screen 301 in the customize mode. When the shift is made to the customize mode, the control means 201 executes the processing to switch the display unit 101 through the drive means 205 from the ordinary display to the initial screen 301 of the customize mode, as shown in Fig. 4.

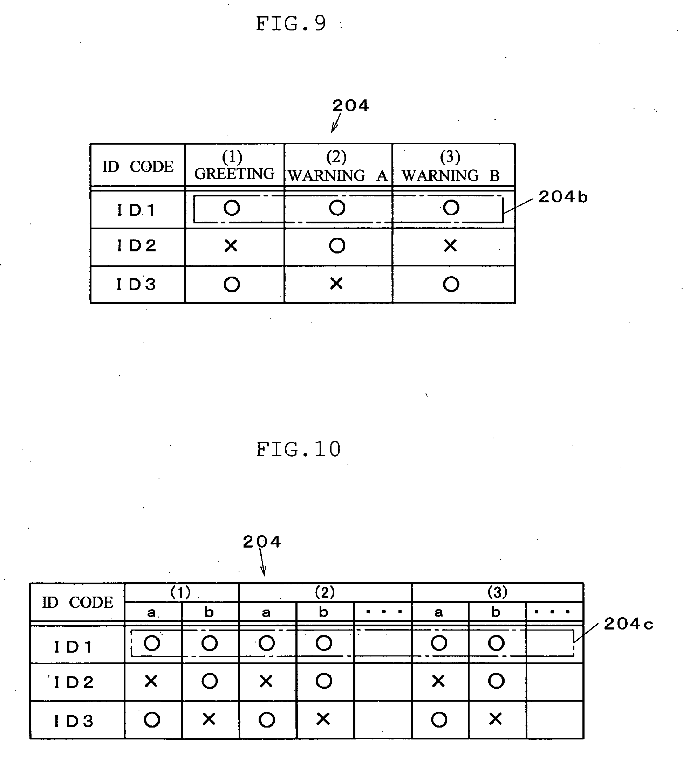

In the initial screen 301, the user selects whether or not the audio information output in the speaker 230 is to be employed for every audio information output items (i.e., the first audio information output items) (1) to (3) stored in the second storage means 204 in the state classified beforehand in plurality through the input means 211. The greeting of the audio information output item (1) belongs to a classification concerning the greeting such as an opening (at the time of starting the engine or opening the door) and an ending (at the time of stopping the engine or switching off the vehicular key) . The warning A of the audio information output item (2) belongs to a classification concerning the warning contents such as a residual fuel level or a shortage of the tire air pressure, which relates directly to the run of the vehicle. The warning B of the audio information output item (3) belongs to a classification concerning the warning contents such as a key reminder or a light reminder, which does not relate directly to the run of the vehicle. If the mode "USE" is selected by the user on the individual audio information output items (1) to (3), for example, the control means 201 specifies the ID code of the user using the vehicle through the keyless entry device 220 (it is here assumed that the ID1 is attained as the ID code), and stores the set contents in the area corresponding to the ID code of the second storage means 204 (as indicated at 204b in Fig. 9).

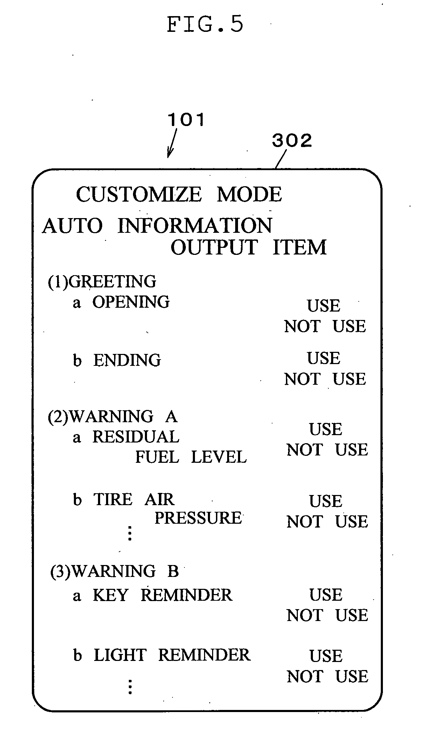

Here is described still another initial screen 302 in the customize mode. When the shift is made to the customize mode, the control means 201 executes the processing to switch the display unit 101 through the drive means 205 from the ordinary display to the initial screen 302 of the customize mode, as shown in Fig. 5.

In the initial screen 302, the user selects whether or not the audio information output in the speaker 230 is to be employed for every first audio information output items (1) to (3) stored in the second storage means 204 in the state classified beforehand in plurality through the input means 211, and for every second audio information output items a and b accompanying those individual first audio information output items (1) to (3). The "greeting" or the first audio information output item (1) contains the second audio information output item a or the "opening (at the time of starting the engine or opening the door)", the second audio information output item b or the "ending (at the time of stopping the engine or switching off the vehicular key)" and so on. Moreover, the "warning A" relating directly to the run of the vehicle or the second audio information output item (2) contains the second audio information output item a or the "residual fuel level warning", the second audio information output item b or the "tire air pressure shortage warning" and so on. The "warning B" having no direct relation to the run of the vehicle or the first audio information output item (3) contains the "key reminder warning" or the second audio information output item a or the "light reminder warning" or the second audio information output item b. If the mode "USE" is selected by the user on all the accompanying individual second audio information output items a and b of the first individual audio information output items (1) to (3), for example, the control means 201 specifies the ID code of the user using the vehicle through the keyless entry device 220 (it is here assumed that the ID1 is attained as the ID code), and stores the individual set contents in the area corresponding to the ID code of the second storage means 204 (as indicated at 204c in Fig. 10).

Here is described still another initial screen 303 in the customize mode. When the shift is made to the customize mode, the control means 201 executes the processing to switch the display unit 101 through the drive means 205 from the ordinary display to the initial screen 303 of the customize mode, as shown in Fig. 6.

In the initial screen 303, the user selects whether or not the audio information output in the speaker 230 is to be employed for every audio information output items (1) and (2) stored in the second storage means 204 in the state classified beforehand in plurality through the input means 211. In every audio information output items (1), it is selected in case the audio information is outputted whether or not the volume of the audio 224 is to be muted (or reduced). In every audio information output items (2), the kind of the voice in the voice output is selected. Here, either a man voice or a woman voice is selected.

This vehicular information providing device 100 can also customize the visual information. Fig. 7 shows an initial screen 304 showing one example of the customize mode in the visual information. In the initial screen 304, the warning display is set in the vehicular information output item (1) concerning the entire warning display. When a warning is generated by the vehicular information from the vehicular information terminal 212, it is selected to switch the "ALWAYS DISPLAY" of the display till the cause is solved or the "REDUCED DISPLAY" after lapse of a predetermined time period. The visual information in the customize mode set here is stored, like the audio information shown in Fig. 8 to Fig. 10, as to the individual set contents in the area corresponding to the ID code of the second storage means 204, such that it is related to the ID code of the keyless entry device 220 for specifying the user.

Here, the ID code of the user used in the aforementioned processing is recognized through the keyless entry device 220 before it shifts to the customize mode. Another configuration may also be made to demand again the ID code of the user after the shift to the customize mode.

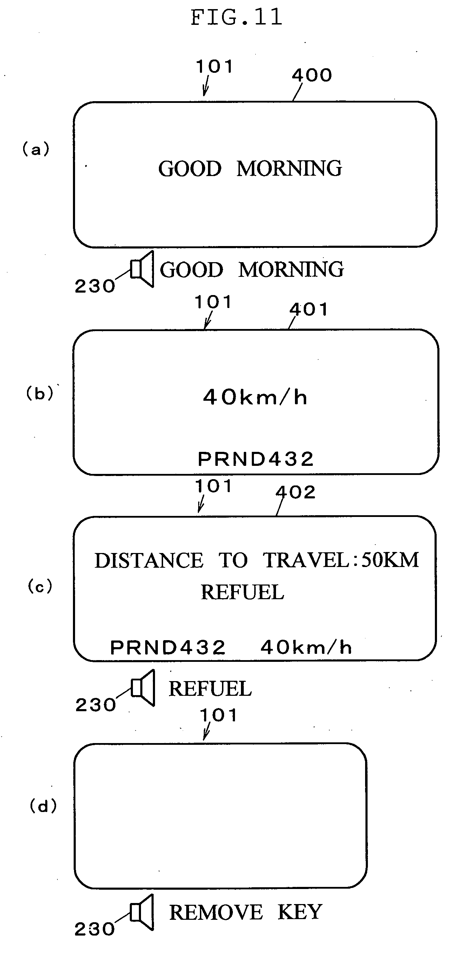

The specific actions of the customize mode are described in the following. Fig. 11 presents the screens of the display unit 101 in the normal run of the vehicle and the screens of the display unit 101 when the audio information is outputted by the control means 201.

The control means 201 specifies the ID code of the user using the vehicle (it is assumed here that the ID1 is gained as the ID code) through the keyless entry device 220, and reads beforehand the customize information ((1) GREETING, (2) WARNING A, (3) WARNING B, and "USE" the audio output) corresponding to the ID code ID1 (as referred to 204b of Fig. 9) from the second storage means 204.

Since the mode "USE" is set in the customize mode of the greeting, the control means 201 decides the presence or absence of the signal ON of the ignition key through the vehicular information terminal 212. The control means 201 displays, when it detects the signal ON of the ignition key, a screen 400 "GOOD MORNING" in the display unit 101 (Fig. 11 (a)) so as to display the greeting to the display unit 101, and executes the voice output processing to output the voice "GOOD MORNING".

The control means 201 causes the display unit 101 to display an ordinary display screen 401 at the ordinary run of the vehicle (Fig. 11 (b)), and it is assumed that the ordinary display screen 401 displays a shift indicator (PRND432) and a vehicle speed (40 km/h).

Since the "USE" is set in the customize mode relating to the warning A, the control means 201 decides the presence or absence of the occurrence of the warning A at the running time of the vehicle though the vehicular information terminal 212. Here, the control means 201 causes, when it detects that the fuel remainder becomes short of a predetermined amount, the display unit 101 to display a warning screen 402 "DISTANCE TO TRAVEL: 50 km, REFUEL" in the display unit 101 (Fig. 11 (c)), and executes the voice output processing so that the speaker 230 may output the voice "REFUEL".

Since the "USE" is set in the customize mode relating to the warning B, the control means 201 decides the presence or absence of the occurrence of the warning B through the vehicular information terminal 212. Here, the control means 201 executes, when it detects that the door on the driver (or user) side is opened with the key being inserted while the vehicular engines being stopped, the voice output processing to cause the speaker 230 to output the voice "REMOVE KEY" (Fig. 11(d)).

The vehicular information providing device 100 comprises: the control means 201 having the customize mode for registering the contents of various kinds of setting of the specifications on the audio information of the speaker 230 to provide the user with the vehicular information with the audio information; the input means 211 for determining the contents of the various kinds of setting in the customize mode; and storage means 204 for registering the contents of the various kinds of setting. It is possible to perform a customized registration of the specifications on the audio information of at least the speaker 230 of the vehicular information providing device according to the tastes of the user of the vehicle, to satisfy the demand of the user having various tastes, and to improve the usability of the speaker 230 or the audio information providing means of the vehicular information providing device 100 thereby to enhance the using frequency of the audio information from the speaker 230. Thus, it is possible to provide the vehicular information providing device excellent in conveniences. It is further possible to improve the marketability of the vehicular information providing device 100.

Moreover, the various kinds of setting of the audio information contain the setting of whether or not the audio information by the speaker 230 is to be notified (i.e., whether or not the audio information providing means is to be employed), so that the user can select it easily according to the tastes whether or not the notification processing of the audio information by the speaker 230 is to be utilized, thereby to improve the usability of the user.

Moreover, the various kinds of setting on the audio information are stored in the second storage means 204 as the first audio information output items (1) to (3) classified in plurality, so that the selection of the audio information according to the tastes of the user is facilitated to enhance the conveniences.

Moreover, the first audio information output items (1) to (3) have the second audio information output items a and b accompanying the individual output items so that the user can select the individual pieces of audio information according to the tastes in more detail thereby to enhance the conveniences more.

Moreover, the various kinds of setting on the audio information contain the setting of whether or not the volume of the audio 224 mounted on the vehicle is to be reduced when the audio information is outputted from the speaker 230, so that the user can judge the contents of the audio information easily when the warning information is notified as the audio information.

Moreover, the various kinds of setting on the audio information contain the selection of the kinds of voice so that the function for the user to customize the audio information can be further enhanced.

Moreover, the various kinds of setting on the audio information are registered in such a state in the second storage means 204 as to relate to the ID code by the keyless entry device 220 for identifying the user and to the contents of the various kinds of setting. It is possible to customize and register the specifications on the audio information of each user and to store the various kinds of setting of the audio information together with the ID code. Therefore, the troublesome operations for the user to set at the time riding on the vehicle are eliminated to enhance the conveniences better as the vehicular information providing device 100 for issuing the audio information.

Moreover, the display unit 101 for displaying the set contents is provided so that the various kinds of setting of the audio information in the customize mode can be viewed to set the audio information easily.

In the foregoing embodiment, the speaker 230 mounted on the vehicle is the audio information providing means. In the invention, however, the vehicular information providing device 100 may also be provided with a dedicated speaker.

In the foregoing embodiment, moreover, the audio information providing means is configured by the speaker 230. However, the audio information can also be easily customized by preparing the audio information providing means composed of a buzzer or chime in place of the speaker 230 and by setting the tone of the audio information providing means variously different.

In the foregoing embodiment, moreover, the volume of the audio 224 is muted in the setting of the customize mode. However, similar effects can be attained even by cutting the volume of the audio 224 by the setting.

In the foregoing embodiment, moreover, the user identifying means is exemplified by the keyless entry device 220. However, the invention should not be limited to the keyless entry device 220, but can naturally employ a device using a user ID code such as a smart entry device requiring no remote control, an immobilizer device for preventing a theft, or a personal identification device for recognizing a fingerprint and the like.

In the foregoing embodiment, moreover, the shift to the customize mode employs the customize mode terminal 210. However, input means may also be composed of a group of plural switches of different functions to "switch the ordinary mode and the customize mode", to "select the set items", to "input the set contents", to "register the set contents" and so on so that the ordinary mode and the customize mode may be switched according to the predetermined input of that input means.

In the foregoing embodiment, moreover, the "selection of the set item" and the "registration of the set contents" are performed by a predetermined input to the input means 211 after the shift to the customize mode. However, one switch for shifting to the customize mode may also be prepared to perform the shift to the customize mode, and the various kinds of setting and the registration in the customize mode. Specifically, a single switch can also be used to "switch the ordinary mode and the customize mode" and to "select the set items" by a pushing operation of a short time period. For the individual set items, the plural set contents can also be displayed in the display unit 101 by switching the plural set contents sequentially by a pushing operation of a short time period, and the set contents can also be registered by a pushing operation of a long time period at the instant when the set contents desired by the user are displayed. By a later pushing operation of a short time period, the shift is made to a next set item. By repeating similar operations, the single switch can also be used to "switch the ordinary mode and the customize mode", to "select the set item" and to "register the set contents". For the other operations to "switch the ordinary mode and the customize mode", to "select the set item", to "input the set contents" and to "register the set contents", voice input means can also be provided for instructing by a voice input through that voice input means.

### Industrial Applicability

The present invention relates to a vehicular information providing device utilizing an audio information providing means, and can be applied not only to a vehicular meter for displaying vehicular information but also to a vehicular information providing device such as a navigation system or a multi-display device to be mounted on a vehicle.

## Claims

1. A vehicular information providing device comprising: control means having a customize mode, in which various kinds of setting of specifications relating to audio information of audio information providing means for providing a user with the audio information containing at least vehicular information are registered; input means for determining the contents of said various kinds of setting in said customize mode; and storage means for registering the contents of said various kinds of setting.

2. A vehicular information providing device according to claim 1, wherein the contents of said various kinds of setting contain an item of whether or not said vehicular information providing means is to be employed.

3. A vehicular information providing device according to claim 1, wherein the contents of said various kinds of setting are stored in said storage means as a first audio information output item classified in plurality.

4. A vehicular information providing device according to claim 3, wherein the contents of said various kinds of setting have a second audio information output item accompanying said first audio information output item.

5. A vehicular information providing device according to claim 1, wherein the contents of said various kinds of setting contain an item on whether or not the volume of an audio device mounted on a vehicle is cut, or whether or not the volume of said audio device is reduced, when said audio information providing means outputs said audio information.

6. A vehicular information providing device according to claim 1, wherein the contents of said various kinds of setting contain an item for selecting the kinds of a voice.

7. A vehicular information providing device according to any of claims 1 to 6, wherein the contents of said various kinds of setting are so registered in said storage means that identification information by user recognition means for recognizing said user and the contents of said various kinds of setting are registered in a related state in said storage means.

8. A vehicular information providing device according to any of claims 1 to 7, further comprising display means for enabling displaying the contents of said various kinds of setting.
